# EUROPÄISCHE PATENTANMELDUNG

(11) **EP 4 679 207 A1**
(43) Veröffentlichungstag der Anmeldung: **14.01.2026**
(21) Anmeldenummer: 25186751.1
(22) Anmeldetag: 01.07.2025
(51) Int. Cl.: G05B 19/042, G05B 9/02, G05B 19/05

(54) **SICHERHEITSSTEUERUNG UND VERFAHREN ZUR HERSTELLUNG EINER SICHERHEITSSTEUERUNG**

(30) Priorität: 08.07.2024 DE 102024119348
(71) Anmelder: Pilz GmbH & Co. KG, 73760 Ostfildern (DE)
(72) Erfinder: Bauknecht, Jochen, 73760 Ostfildern (DE); Kluge, Marco, 73760 Ostfildern (DE)
(74) Vertreter: Manske, Jörg

(57) **Zusammenfassung**

Die Erfindung betrifft eine Sicherheitssteuerung (1), umfassend
- eine Mehrzahl von Sicherheitseingängen (30a, 30b, 30c, 30d) zum Anschluss von Signalgebern und eine Mehrzahl von Sicherheitsausgängen (31a, 31b, 31c, 31d) zum Anschluss von Aktoren,
- eine sichere Steuerungseinrichtung (20), die dazu ausgebildet ist, ein Steuerungsprogramm (210) auszuführen, mittels dessen Eingangssignale der Sicherheitseingänge (30a, 30b, 30c, 30d) auswertbar sind und Ansteuersignale zum Ansteuern der Sicherheitsausgänge (31a, 31b, 31c, 31d) erzeugbar sind,
wobei Betriebsparameter der Sicherheitssteuerung (1), die zumindest Einschaltverzögerungen und/oder Abschaltverzögerungen für die an die Sicherheitsausgänge (31a, 31b, 31c, 31d) anschließbaren Aktoren umfassen, einstellbar sind, und wobei die Einstellungen zumindest einiger der einstellbaren Betriebsparameter der Sicherheitssteuerung (1) fest einprogrammiert sind und in einem nicht-flüchtigen Speichermittel (21) der sicheren Steuerungseinrichtung (20) abrufbar gespeichert sind.

## Beschreibung

Die vorliegende Erfindung betrifft eine Sicherheitssteuerung, umfassend eine Mehrzahl von Sicherheitseingängen zum Anschluss von Signalgebern und eine Mehrzahl von Sicherheitsausgängen zum Anschluss von Aktoren, eine sichere Steuerungseinrichtung, die dazu ausgebildet ist, ein Steuerungsprogramm auszuführen, mittels dessen Eingangssignale der Sicherheitseingänge auswertbar sind und Ansteuersignale zum Ansteuern der Sicherheitsausgänge erzeugbar sind, wobei Betriebsparameter der Sicherheitssteuerung, die zumindest Einschaltverzögerungen und/oder Abschaltverzögerungen für die an die Sicherheitsausgänge anschließbaren Aktoren umfassen, einstellbar sind. Darüber hinaus betrifft die vorliegende Erfindung ein Verfahren zur Herstellung einer Sicherheitssteuerung.

Sicherheitssteuerungen, welche der internationalen Norm EN IEC 61508 unterliegen, sind aus dem Stand der Technik in unterschiedlichen Ausführungsformen bekannt. Diese Sicherheitssteuerungen dienen insbesondere dem Zweck, technische Anlagen oder Maschinen beim Auftreten einer Gefahrensituation fehlerfrei und sicher in einen für Menschen ungefährlichen Zustand zu überführen. Zu diesem Zweck werden eingangsseitig mittels einer Anzahl von Sicherheitseingängen entsprechende Eingangssignale von Signalgebern, bei denen es sich zum Beispiel um Lichtgitter, Lichtvorhänge, Trittmatten, Schutztürpositionsschalter, 3D-Laserscanner, Sensoren, Not-Aus-Schalter, Not-Halt-Schalter, etc. handeln kann, empfangen und mittels der sicheren Steuerungseinrichtung ausgewertet. Ausgangsseitig werden entsprechende Sicherheitsausgänge eines Ausgangskreises von der sicheren Steuerungseinrichtung angesteuert. Über diese Sicherheitsausgänge werden beim Auftreten einer Gefahrensituation Aktoren, wie zum Beispiel Schütze, Ventile etc., mit Ausgangssignalen derart angesteuert, dass die an diese Aktoren angeschlossene Maschine beziehungsweise die daran angeschlossenen Maschinen in einen für Menschen ungefährlichen Zustand überführt werden.

Es besteht die Möglichkeit, Sicherheitssteuerungen modular auszuführen. Modulare Sicherheitssteuerungen umfassen ein zentrales übergeordnetes Steuerungsmodul sowie mehrere Anschlussmodule und gegebenenfalls weitere Elektronikmodule, die in zumindest einer Modulreihe angeordnet sind und bestimmte Funktionen zur Verfügung stellen. Der modulare Aufbau einer Sicherheitssteuerung schafft in vorteilhafter Weise die Möglichkeit einer anwendungsspezifischen Konfiguration, indem mehrere Anschlussmodule und gegebenenfalls weitere Elektronikmodule individuell zusammengestellt, miteinander verdrahtet und so konfiguriert werden, dass sie die gewünschten Sicherheitsfunktionen zur Verfügung stellen können.

Beispiele für Anschlussmodule und Elektronikmodule, aus denen modulare Sicherheitssteuerungen mit ganz unterschiedlichen Sicherheitsfunktionen aufgebaut werden können, sind unter anderem Eingangsmodule mit Sicherheitseingängen, die Eingangssignale eines oder mehrerer Signalgeber, wie zum Beispiel Eingangssignale von Sensoren oder Notbefehlsgeräten, empfangen und gegebenenfalls verarbeiten können, Ausgangsmodule mit Sicherheitsausgängen, die Ausgangssignale an einen oder mehrere daran angeschlossene Aktoren ausgeben können, kombinierte Eingangs- und Ausgangsmodule (so genannte I/O-Module) mit Sicherheitseingängen und Sicherheitsausgängen, Steuerungsmodule, welche die Zuordnung von Eingangs- zu Ausgangsmodulen steuern können, sowie Schnittstellenmodule, Kommunikationsmodule, Feldbuscontroller, Feldbuskoppler, etc.. Bei der Herstellung der modularen Sicherheitssteuerung werden die Anschlussmodule und die gegebenenfalls vorgesehenen Elektronikmodule in der zumindest einen Modulreihe aneinandergereiht und entsprechend verdrahtet und so konfiguriert, dass sie die für den konkreten Anwendungszweck unter Sicherheitsaspekten erforderlichen Funktionen zur Verfügung stellen können.

Aus dem Stand der Technik ist es bekannt, dass bestimmte Betriebsparameter der Sicherheitssteuerung mithilfe physischer, manuell verstellbarer Einstellelemente, bei denen es sich insbesondere um Potentiometer oder DIP-Schalter handeln kann, eingestellt und variiert werden können und dadurch an die konkreten Anforderungen, die an die Sicherheitssteuerung gestellt werden, angepasst werden können. Durch Änderungen der Drehstellungen der Potentiometer können zum Beispiel Einschalt- und/oder Abschaltverzögerungen der an die Sicherheitsausgänge angeschlossenen Aktoren eingestellt werden.

Ein Nachteil, der mit den aus dem Stand der Technik bekannten Sicherheitssteuerungen verbunden ist, besteht darin, dass die Ausstattung mit physischen Einstellelementen, insbesondere mit Potentiometern oder DIP-Schaltern, mit relativ hohen Kosten verbunden ist. Nachteilig ist ferner, dass die physischen Einstellelemente nachträglich sehr einfach manipuliert werden können, indem deren Schaltstellungen unbefugt verändert werden. Dadurch kann die Funktion der Sicherheitssteuerung unter Umständen beeinträchtigt werden. Zudem können widrige Umgebungsbedingungen, insbesondere stark staubhaltige Umgebungen, gegebenenfalls zu Fehlfunktionen der physischen Einstellelemente führen, die sich ebenfalls negativ auf die Betriebssicherheit der Sicherheitssteuerungen auswirken können.

Die Erfindung macht es sich zur Aufgabe, eine Sicherheitssteuerung der eingangs genannten Art derart weiterzubilden, dass sie die aus dem Stand der Technik bekannten Nachteile auf einfache und kostengünstige Art und Weise vermeidet und insbesondere die Betriebs- und Manipulationssicherheit erhöht. Eine weitere Aufgabe der Erfindung besteht darin, ein Verfahren zur Herstellung einer Sicherheitssteuerung anzugeben.

Die Lösung dieser Aufgabe liefert eine Sicherheitssteuerung der eingangs genannten Art mit den Merkmalen des kennzeichnenden Teils des Anspruchs 1. Hinsichtlich des Verfahrens wird die Aufgabe der vorliegenden Erfindung durch ein Verfahren zur Herstellung einer Sicherheitssteuerung mit den Merkmalen des Anspruchs 9 gelöst. Die Unteransprüche betreffen vorteilhafte Weiterbildungen der Erfindung.

Eine erfindungsgemäße Sicherheitssteuerung zeichnet sich dadurch aus, dass die Einstellungen zumindest einiger der Betriebsparameter der Sicherheitssteuerung fest einprogrammiert sind und in einem nicht-flüchtigen Speichermittel der sicheren Steuerungseinrichtung abrufbar gespeichert sind. Das Steuerungsprogramm, mittels dessen die Sicherheitssteuerung gesteuert wird, kann bei seiner Ausführung auf die fest einprogrammierten Einstellungen der Betriebsparameter der Sicherheitssteuerung zugreifen. Dadurch ist es möglich, die Einstellungen zumindest einiger der physischen Einstellelemente, die bei den aus dem Stand der Technik bekannten Sicherheitssteuerungen zur Einstellung der zugehörigen Betriebsparameter vorhanden sind, softwarebasiert durch das Steuerungsprogramm zu emulieren. Daraus resultiert insbesondere eine erhöhte Manipulationssicherheit, da ein Zugriff auf die Betriebsparameter der Sicherheitssteuerung ausschließlich softwarebasiert erfolgt. Unter "fest einprogrammiert" soll im Rahmen der vorliegenden Erfindung ausdrücklich nicht verstanden werden, dass nachträglich keine Änderungen des Steuerungsprogramms und Anpassungen der Betriebsparameter mehr möglich sind. Über eine Programmierschnittstelle können entsprechende Änderungen beziehungsweise Anpassungen vorgenommen werden. Die Einstellungen zumindest einiger der Betriebsparameter der Sicherheitssteuerung können unmittelbar Teil des Programmcodes des Steuerungsprogramms sein oder - beispielsweise in Form einer Tabelle - separat in dem nicht-flüchtigen Speichermittel abrufbar gespeichert sein, so dass sie bei der Ausführung des Steuerungsprogramms abgerufen werden können.

In einer vorteilhaften Ausführungsform wird vorgeschlagen, dass die Sicherheitssteuerung zumindest teilweise ohne physische Einstellelemente zum Einstellen der Betriebsparameter der Sicherheitssteuerung ausgeführt ist.

In einer bevorzugten Ausführungsform können die Einstellungen aller einstellbaren Betriebsparameter der Sicherheitssteuerung fest einprogrammiert sein und in dem nicht-flüchtigen Speichermittel der sicheren Steuerungseinrichtung abrufbar gespeichert sein.

In einer besonders bevorzugten Ausführungsform ist vorgesehen, dass die Sicherheitssteuerung vollständig ohne physische Einstellelemente zum Einstellen der Betriebsparameter der Sicherheitssteuerung ausgeführt ist.

Dadurch, dass die Sicherheitssteuerung zumindest teilweise ohne physische Einstellelemente zum Einstellen der Betriebsparameter der Sicherheitssteuerung ausgeführt ist oder besonders vorteilhaft überhaupt keine physischen, mechanisch verstellbaren Einstellelemente zum Einstellen der Betriebsparameter mehr aufweist, können die Kosten für die Herstellung der Sicherheitssteuerung in vorteilhafter Weise verringert werden. Der vollständige Verzicht auf physische, manuell betätigbare Einstellelemente zum Einstellen der Betriebsparameter der Sicherheitssteuerung erhöht überdies die Manipulationssicherheit und ermöglicht insbesondere auch den Einsatz der Sicherheitssteuerung unter widrigen Umgebungsbedingungen, wie zum Beispiel in besonders stark staubbelasteten Umgebungen.

In einer Ausführungsform besteht die Möglichkeit, dass die fest einprogrammierten Betriebsparameter Taktarten für Takterkennungen zum Testen der Sicherheitssteuerung umfassen. Über die Sicherheitsausgänge werden bei entsprechender Beschaltung bestimmte Takte auf die Sicherheitseingänge gelegt, um dadurch zum Beispiel eine Querschlusserkennung zu ermöglichen.

In einer vorteilhaften Ausführungsform wird vorgeschlagen, dass die fest einprogrammierten Betriebsparameter ausgewählte Sicherheitsfunktionen, die mittels der Sicherheitssteuerung realisierbar sind, umfassen. Dabei kann es sich insbesondere um Sicherheitsfunktionen gemäß der aktuellen Norm EN IEC 61508 handeln.

In einer Ausführungsform kann vorgesehen sein, dass die fest einprogrammierten Betriebsparameter Startarten für die an die Sicherheitssteuerung anschließbaren Aktoren umfassen.

In einer Ausführungsform wird vorgeschlagen, dass die Sicherheitssteuerung modular ausgebildet ist und ein zentrales Steuerungsmodul, welches die sichere Steuerungseinrichtung umfasst, sowie eine Mehrzahl von Anschlussmodulen, welche die Sicherheitseingänge und/oder die Sicherheitsausgänge umfassen, aufweist. Das zentrale Steuerungsmodul, das häufig auch als Kopfmodul bezeichnet wird, sowie die Anschlussmodule sind in zumindest einer Modulreihe angeordnet.

Ein erfindungsgemäßes Verfahren zur Herstellung einer Sicherheitssteuerung umfasst die Schritte:
- Konfigurieren der Sicherheitsfunktionen und/oder modularer Komponenten der Sicherheitssteuerung mittels eines softwarebasierten Konfigurationswerkzeugs und Einstellen der Betriebsparameter der Sicherheitssteuerung mittels des Konfigurationswerkzeugs,
- Speichern der Konfiguration der Sicherheitssteuerung und der Einstellungen der Betriebsparameter,
- Herstellen der Sicherheitssteuerung ohne physische Einstellelemente zum Einstellen der Betriebsparameter der Sicherheitssteuerung auf Basis der gespeicherten Konfiguration,
- Programmieren eines Steuerungsprogramms zur Steuerung der Sicherheitssteuerung, wobei die Betriebsparameter der Sicherheitssteuerung fest einprogrammiert werden, und
- Speichern des Steuerungsprogramms und der fest einprogrammierten Betriebsparameter in einem nicht-flüchtigen Speichermittel der Sicherheitssteuerung.

Die anwendungsspezifische Konfiguration der Sicherheitssteuerung kann somit mittels eines softwarebasierten Konfigurationswerkzeugs erfolgen. Eine grafische Benutzerschnittstelle des Konfigurationswerkzeugs, die einem Benutzer beispielsweise über das Internet zur Verfügung gestellt wird, ermöglicht eine einfache und intuitive Bedienung des Konfigurationswerkzeugs. Der Benutzer kann interaktive Benutzereingaben vornehmen und zum Beispiel entsprechende Logikanforderungen, die an die Sicherheitssteuerung gestellt werden, festlegen. Bei dem Konfigurationsprozess können zum Beispiel auch bestimmte, in der zu steuernden Anlage beziehungsweise Maschine vorhandene Signalgeber, wie zum Beispiel Not-Aus- oder Not-Halt-Taster, Schutztüren, Lichtgitter usw., oder Sensoren, deren Eingangssignale sicher ausgewertet werden müssen, sowie Aktoren, die sicher angesteuert werden müssen, von dem Benutzer ausgewählt werden. Somit können also die Sicherheitseingänge und die Sicherheitsausgänge der Sicherheitssteuerung mithilfe des Konfigurationswerkzeugs konfiguriert werden. Die Betriebsparameter der Sicherheitssteuerung beziehungsweise bei einem modularen Aufbau die Betriebsparameter der Anschlussmodule können von einem Benutzer festgelegt werden und zusätzlich zu der Konfiguration gespeichert werden.

Vorzugsweise werden während des Schritts des Konfigurierens physische Einstellelemente der Sicherheitssteuerung zum Einstellen der Betriebsparameter mittels einer grafischen Benutzeroberfläche des softwarebasierten Konfigurationswerkzeugs visualisiert, um die Einstellungen der Betriebsparameter während des Konfigurationsprozesses zu vereinfachen. Der Kunde kann die Schaltstellungen der physischen Einstellelemente, insbesondere die Drehstellungen der Potentiometer, bei der Konfiguration durch entsprechende Nutzereingaben einfach und intuitiv vorgeben, so dass diese bei der Herstellung der Sicherheitssteuerung herstellerseitig in dem Steuerungsprogramm implementiert werden können.

Weitere Merkmale und Vorteile von Ausführungsbeispielen der Erfindung werden unter Bezugnahme auf die Zeichnungen nachfolgend beschrieben. Es zeigen:
- Fig. 1: eine schematisch stark vereinfachte Darstellung einer Sicherheitssteuerung, die gemäß einem Ausführungsbeispiel der vorliegenden Erfindung ausgeführt ist,
- Fig. 2: eine schematische Darstellung, die den Ablauf eines Verfahrens zur Herstellung einer Sicherheitssteuerung veranschaulicht.

Es ist nicht notwendig, dass eine erfindungsgemäße Sicherheitssteuerung 1 alle nachfolgend beschriebenen Merkmale aufweist. Es ist auch möglich, dass eine erfindungsgemäße Sicherheitssteuerung 1 nur einzelne Merkmale des nachfolgend beschriebenen Ausführungsbeispiels aufweist.

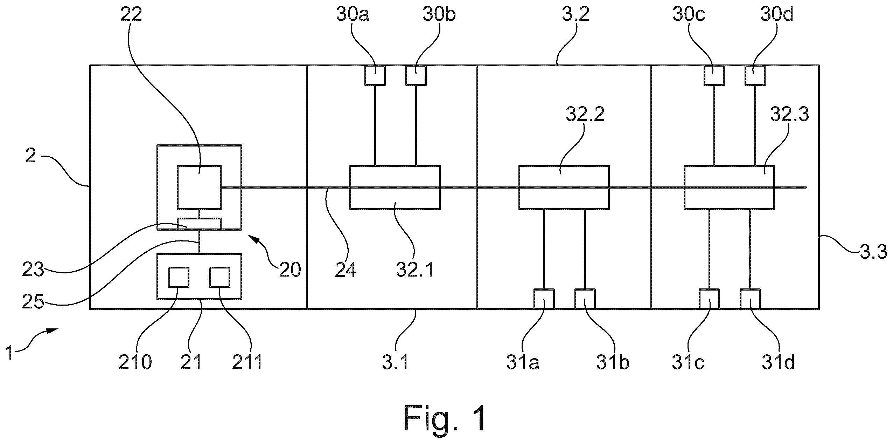

Bei der in Fig. 1 dargestellten Steuerungseinrichtung 1 handelt es sich um eine modular ausgebildete Steuerungseinrichtung 1. Das nachfolgend beschriebene Konzept setzt aber ausdrücklich keine Modularität der Steuerungseinrichtung 1 voraus und kann somit auch auf Steuerungseinrichtungen 1 übertragen werden, die nicht modular ausgebildet sind.

Die modular ausgebildete Sicherheitssteuerung 1 umfasst ein zentrales (übergeordnetes) Steuerungsmodul 2, welches häufig auch als Kopfmodul bezeichnet wird, sowie eine Mehrzahl von Anschlussmodulen 3.1, 3.2, 3.3. Das zentrale Steuerungsmodul 2 und die Anschlussmodule 3.1, 3.2, 3.3 sind zusammen in einer Modulreihe angeordnet.

Das zentrale Steuerungsmodul 2 verfügt über eine Spannungsversorgung für das Steuerungsmodul 2 und die daran angeschlossenen Anschlussmodule 3.1, 3.2, 3.3. Ferner umfasst das zentrale Steuerungsmodul 2 eine sichere Steuerungseinrichtung 20, die zumindest einen Mikroprozessor 22, zumindest ein flüchtiges Speichermittel (RAM-Speichermittel) 23 und ein nicht-flüchtiges Speichermittel 21, in dem zumindest ein Steuerungsprogramm 210 mit Programminstruktionen für den Betrieb der Steuerungseinrichtung 1 als Programmcode abrufbar gespeichert ist, umfasst. Die Steuerungseinrichtung 20 kann zum Beispiel als Microcontroller ausgebildet sein. Um die Betriebs- und Ausfallsicherheit der modularen Sicherheitssteuerung 1 zu erhöhen, besteht die Möglichkeit, die Steuerungseinrichtung 20 redundant auszuführen.

Die sichere Steuerungseinrichtung 20 und das nicht-flüchtige Speichermittel 21 stehen über eine bidirektionale Datenkommunikationsschnittstelle 25, insbesondere über einen Datenbus, in Kommunikationsverbindung miteinander. Dadurch wird erreicht, dass die Steuerungseinrichtung 20 auf das in dem nicht-flüchtigen Speichermittel 21 abrufbar gespeicherte Steuerungsprogramm 210 zum Betrieb der Sicherheitssteuerung 1 zugreifen kann und das Steuerungsprogramm 210 mittels des Mikroprozessors 22 ausführen kann. Beim Einschalten der Steuerungseinrichtung 1 wird das Steuerungsprogramm 210 mit den Programminstruktionen in das flüchtige Speichermittel 23 geladen und von dem Mikroprozessor 22 ausgeführt.

Die Anschlussmodule 3.1, 3.2, 3.3, die zusammen mit dem Steuerungsmodul 2 in der Modulreihe angeordnet sind, sind aus einer Mehrzahl unterschiedlicher Anschlussmodultypen ausgewählt, die dazu eingerichtet sind, während des Betriebs der modularen Sicherheitssteuerung 1 bestimmte Sicherheitsfunktionen gemäß der internationalen Norm IEC 61508 bereitzustellen. Bei den auswählbaren Anschlussmodulen 3.1, 3.2, 3.3 kann es sich zum Beispiel um folgende Anschlussmodultypen handeln:
- Eingangsmodule mit Sicherheitseingängen 30a, 30b, über die Eingangssignale eines oder mehrerer Signalgeber, wie zum Beispiel Eingangssignale von Sensoren oder Meldegeräten, insbesondere Notbefehlsgeräten, sicher empfangen werden können,
- Ausgangsmodule mit Sicherheitsausgängen 31a, 31b, über die Ausgangssignale, insbesondere Einschaltsignale und Abschaltsignale, an einen oder mehrere daran angeschlossene Aktoren sicher ausgegeben werden können,
- kombinierte Eingangs- und Ausgangsmodule (so genannte I/O-Module) mit Sicherheitseingängen 30c, 30d und Sicherheitsausgänge 31c, 31d.

Die Sicherheitssteuerung 1 kann zusätzlich zu den Anschlussmodulen 3.1, 3.2, 3.3 noch weitere Elektronikmodule umfassen. Bei diesen Elektronikmodulen kann es sich zum Beispiel um Steuerungsmodule, welche die Zuordnung von Eingangsmodulen 3.1 zu Ausgangsmodulen 3.2 steuern können, sowie Schnittstellenmodule, Kommunikationsmodule, Feldbuscontroller, Feldbuskoppler, etc. handeln.

Ausdrücklich nicht als abschließend zu verstehende Beispiele für Signalgeber, deren Signale als Eingangssignale von der Sicherheitssteuerung 1 empfangen werden können, sind Not-Aus-Schalter, Not-Halt-Schalter, Lichtgitter, 3D-Laserscanner, Schutztüren, Sicherheitskameras, Schaltmatten, Temperatursensoren oder Drucksensoren. Wenn mithilfe eines der Signalgeber das Auftreten einer Gefahrensituation erfasst wird, werden die an die Sicherheitsausgänge 31a, 31b, 31c, 31d angeschlossenen Aktoren von der Sicherheitssteuerung 1 sicherheitsgerichtet abgeschaltet. Die an die Aktoren angeschlossenen Maschinen werden dadurch ebenfalls sicherheitsgerichtet abgeschaltet beziehungsweise zumindest in einen für Menschen ungefährlichen Betriebszustand überführt. Bei den Aktoren kann es sich zum Beispiel um Schütze oder Ventile handeln, die ihrerseits an eine Maschine angeschlossen sind, deren Betrieb mit der Sicherheitssteuerung 1 gesteuert werden soll.

Für die weiteren Erläuterungen soll exemplarisch angenommen werden, dass die Sicherheitssteuerung 1 das zentrale Steuerungsmodul 2 sowie drei Anschlussmodule 3.1, 3.2, 3.3 umfasst. Bei einem ersten Anschlussmodul 3.1 handelt es sich um ein Eingangsmodul mit zwei Sicherheitseingängen 30a, 30b. Ein zweites Anschlussmodul 3.2 ist als Ausgangsmodul mit zwei Sicherheitsausgängen 31a, 31b ausgeführt. Ein drittes Anschlussmodul 3.3 ist vorliegend als kombiniertes Eingangs- und Ausgangsmodul mit zwei Sicherheitseingängen 30c, 30d und zwei Sicherheitsausgängen 31c, 31d ausgeführt.

Jedes der Anschlussmodule 3.1, 3.2, 3.3 weist eine eigene Steuerungseinheit 32.1, 32.2, 32.3 auf, die insbesondere einen Mikroprozessor umfassen kann. Alternativ können die Steuerungseinheiten 32.1, 32.2, 32.3 auch als FPGA (engl.: Field Programmable Gate Array) oder als anwendungsspezifische integrierte Schaltung (ASIC) ausgeführt sein. Die Steuerungseinheiten 32.1, 32.2, 32.3 ermöglichen in erster Linie eine Kommunikation zwischen den Anschlussmodulen 3.1, 3.2, 3.3 und dem zentralen Steuerungsmodul 2, können aber gegebenenfalls weitere Steuerungs- und/oder Überwachungsfunktionen ausführen.

Die Sicherheitssteuerung 1 umfasst in dem hier gezeigten Ausführungsbeispiel eine serielle, bidirektionale Kommunikationsverbindung 24 zwischen der sicheren Steuerungseinrichtung 20 des zentralen Steuerungsmoduls 2 und den Steuerungseinheiten 32.1, 32.2, 32.3 der Anschlussmodule 3.1, 3.2, 3.3, so dass während des Betriebs der modularen Steuerungseinrichtung 1 ein Datenaustausch zwischen der Steuerungseinrichtung 20 des zentralen Steuerungsmoduls 2 und den Steuerungseinheiten 32.1, 32.2, 32.3 erfolgen kann. Bei dieser seriellen, bidirektionalen Kommunikationsverbindung 24 kann es sich insbesondere um einen Datenbus handeln.

Bei den aus dem Stand der Technik bekannten Sicherheitssteuerungen können bestimmte Betriebsparameter der Anschlussmodule und gegebenenfalls auch des zentralen Steuerungsmoduls verändert werden, indem die Schaltstellungen physischer Einstellelemente, die diesen Betriebsparametern zugeordnet sind, von einem Benutzer entsprechend verändert werden. Bei diesen physischen Einstellelementen kann es sich insbesondere um Potentiometer oder um DIP-Schalter handeln. Die Betriebsparameter, die mittels der Einstellelemente verändert werden können, sind zum Beispiel Einschaltverzögerungen und/oder Abschaltverzögerungen für die an die Sicherheitsausgänge angeschlossenen Aktoren. Ein Nachteil, der mit den aus dem Stand der Technik bekannten Sicherheitssteuerungen verbunden ist, besteht darin, dass die Ausstattung mit physischen Einstellelementen, insbesondere mit Potentiometern oder DIP-Schaltern, mit relativ hohen Kosten verbunden ist. Nachteilig ist ferner, dass die physischen Einstellelemente nachträglich sehr einfach manipuliert werden können, indem deren Schaltstellungen unbefugt verändert werden. Dadurch kann die Funktion der Sicherheitssteuerung unter Umständen beeinträchtigt werden. Zudem können widrige Umgebungsbedingungen, insbesondere stark staubhaltige Umgebungen, gegebenenfalls zu Fehlfunktionen der physischen Einstellelemente führen, die sich ebenfalls negativ auf die Funktion und die Betriebssicherheit der Sicherheitssteuerungen auswirken können.

Um diesen vorstehend genannten Problemen abzuhelfen, wird vorgeschlagen, bei der hier vorgestellten Sicherheitssteuerung 1 vollständig auf die bislang verwendeten physischen Einstellelemente zum Einstellen der Betriebsparameter zu verzichten.

Die sichere Steuerungseinrichtung 20 ist dazu ausgebildet, die bislang mithilfe physischer Einstellelemente vorgenommenen Einstellungen der Betriebsparameter mittels des Steuerungsprogramms 210 zu emulieren. Die Einstellungen der Betriebsparameter sind fest in die Sicherheitssteuerung 1 einprogrammiert. Zu diesen fest einprogrammierten Betriebsparametern zählen zumindest die Einschaltverzögerungen und/oder die Abschaltverzögerungen für die an die Sicherheitsausgänge 31a, 31b, 31c, 31d angeschlossenen Aktoren. Ferner können die fest einprogrammierten Betriebsparameter auch einstellbare Taktarten für Takterkennungen zum Testen der Sicherheitssteuerung 1 umfassen. Über die Sicherheitsausgänge 31a, 31b, 31c, 31d werden bei entsprechender Beschaltung bestimmte Takte auf die Sicherheitseingänge 30a, 30b, 30c, 30d gelegt, um dadurch zum Beispiel eine Querschlusserkennung zu ermöglichen. Weitere fest einprogrammierte Betriebsparameter können ausgewählte Sicherheitsfunktionen, die mittels der Sicherheitssteuerung 1 realisierbar sind, umfassen. Dabei kann es sich insbesondere um Sicherheitsfunktionen gemäß der Norm EN IEC 61508 handeln. Weitere fest einprogrammierte Betriebsparameter können zum Beispiel unterschiedliche Startarten für die an die Sicherheitssteuerung 1 über die Aktoren angeschlossenen Maschinen, wie zum Beispiel ein automatisches Wiederanfahren der an die Aktoren angeschlossenen Maschinen nach dem Ende der Gefahrensituation, umfassen. Vorzugsweise werden alle Einstellungen der Betriebsparameter der Sicherheitssteuerung 1 fest einprogrammiert. Die Einstellungen (Werte) der Betriebsparameter können in dem nicht-flüchtigen Speichermittel 21 zum Beispiel als Tabelle 211 gespeichert sein und bei der Ausführung des Steuerungsprogramms 210 durch den Mikroprozessor 22 von der sicheren Steuerungseinrichtung 20 abgerufen werden. Die Einstellungen (Werte) der Betriebsparameter können alternativ auch integraler Bestandteil des Programmcodes des Steuerungsprogramms 210 sein.

Mittels des Steuerungsprogramms 210 werden die Stellungen der physischen Einstellelemente und die daraus resultierenden Einstellungen der Betriebsparameter emuliert. Das Verhalten der Sicherheitssteuerung 1 im Falle des Auftretens einer Gefahrensituation entspricht somit vollumfänglich dem Verhalten einer Sicherheitssteuerung, die mit physischen Einstellelementen zur Einstellung der Betriebsparameter ausgestattet ist.

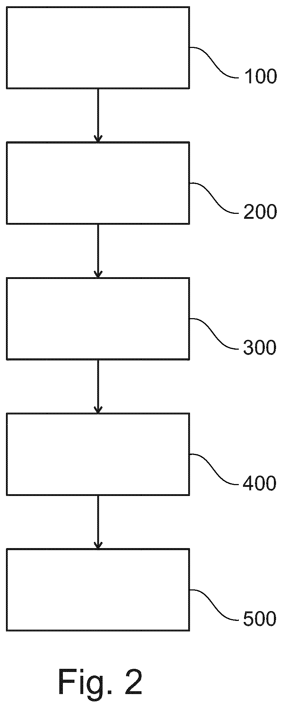

Unter Bezugnahme auf Fig. 2 umfasst ein Verfahren zur Herstellung einer Sicherheitssteuerung 1 die Schritte:
- Konfigurieren 100 der Sicherheitsfunktionen und/oder modularer Komponenten der Sicherheitssteuerung 1 mittels eines softwarebasierten Konfigurationswerkzeugs und Einstellen der Betriebsparameter der Sicherheitssteuerung 1 mittels des Konfigurationswerkzeugs,
- Speichern 200 der Konfiguration der Sicherheitssteuerung 1 und der Einstellungen der Betriebsparameter,
- Herstellen 300 der Sicherheitssteuerung 1 ohne physische Einstellelemente zum Einstellen der Betriebsparameter der Sicherheitssteuerung 1 auf Basis der gespeicherten Konfiguration,
- Programmieren 400 eines Steuerungsprogramms 210 zur Steuerung der Sicherheitssteuerung 1, wobei die Betriebsparameter der Sicherheitssteuerung 1 fest einprogrammiert werden, und
- Speichern 500 des Steuerungsprogramms 210 und der fest einprogrammierten Betriebsparameter in dem nicht-flüchtigen Speichermittel 21 der Sicherheitssteuerung 1.

Während des Konfigurationsvorgangs der Sicherheitssteuerung 1 mittels des softwarebasierten Konfigurationswerkzeugs, welches zum Beispiel ein über das Internet bereitgestellter Online-Konfigurator mit einer grafischen Benutzeroberfläche sein kann, wählt der Kunde die für den konkreten Anforderungszweck benötigten Anschlussmodule 3.1, 3.2, 3.3 und gegebenenfalls weitere Elektronikmodule aus. Dabei kann der Kunde die Einstellungen der Betriebsparameter der Anschlussmodule 3.1, 3.2, 3.3 im Konfigurationswerkzeug vorgeben. Um die Vorgabe der Einstellungen der Betriebsparameter zu vereinfachen, können die den Betriebsparametern zugeordneten physischen Einstellelemente mittels der grafischen Benutzeroberfläche des Konfigurationswerkzeugs visualisiert werden. Der Kunde kann dann die Einstellungen der visualisierten physischen Einstellelemente durch entsprechende Eingaben anpassen.

Nach Abschluss der Konfiguration der Sicherheitssteuerung 1 kann der Kunde auswählen, dass er eine Sicherheitssteuerung 1 ohne physische Einstellelemente, wie zum Beispiel Potentiometer, zur Einstellung der Betriebsparameter wünscht. Vom Hersteller wird dann die Sicherheitssteuerung 1 mit dem zentralen Steuerungsmodul 2 und den daran angereihten Anschlussmodulen 3.1, 3.2, 3.3 produziert, wobei die Anschlussmodule 3.1, 3.2, 3.3 keine physischen Einstellelemente zur Einstellung der Betriebsparameter mehr aufweisen. Das Steuerungsprogramm 210 wird vom Hersteller entsprechend vorprogrammiert und zusammen mit den vorkonfigurierten Einstellungen der Betriebsparameter in dem nicht-flüchtigen Speichermittel 21 gespeichert. Nach der Installation und Durchführung eines Inbetriebnahmetests kann die Sicherheitssteuerung 1 dann im Produktivbetrieb eingesetzt werden. Das Steuerungsprogramm 210 und die einprogrammierten Einstellungen der Betriebsparameter können bei Bedarf nachträglich mittels einer Programmierschnittstelle angepasst beziehungsweise verändert werden.

Die hier vorgestellte Sicherheitssteuerung 1 weist gegenüber den aus dem Stand der Technik bekannten Sicherheitssteuerungen einige Vorteile auf. Da die Sicherheitssteuerung 1 keine physischen Einstellelemente zur Einstellung der Betriebsparameter mehr aufweist, können Herstellungskosten eingespart werden. Zudem ergibt sich eine erhöhte Manipulationssicherheit, da ein Zugriff auf die Betriebsparameter ausschließlich softwarebasiert erfolgt und unautorisierte Änderungen dadurch zumindest erschwert werden. Darüber hinaus kann die Sicherheitssteuerung 1 auch in schwierigen Betriebsumgebungen, in denen zum Beispiel eine erhöhte Beaufschlagung mit Staub auftritt, verwendet werden.

## Patentansprüche

1. Sicherheitssteuerung (1), umfassend
- eine Mehrzahl von Sicherheitseingängen (30a, 30b, 30c, 30d) zum Anschluss von Signalgebern und eine Mehrzahl von Sicherheitsausgängen (31a, 31b, 31c, 31d) zum Anschluss von Aktoren,
- eine sichere Steuerungseinrichtung (20), die dazu ausgebildet ist, ein Steuerungsprogramm (210) auszuführen, mittels dessen Eingangssignale der Sicherheitseingänge (30a, 30b, 30c, 30d) auswertbar sind und Ansteuersignale zum Ansteuern der Sicherheitsausgänge (31a, 31b, 31c, 31d) erzeugbar sind, wobei Betriebsparameter der Sicherheitssteuerung (1), die zumindest Einschaltverzögerungen und/oder Abschaltverzögerungen für die an die Sicherheitsausgänge (31a, 31b, 31c, 31d) anschließbaren Aktoren umfassen, einstellbar sind,
**dadurch gekennzeichnet, dass** die Einstellungen zumindest einiger der einstellbaren Betriebsparameter der Sicherheitssteuerung (1) fest einprogrammiert sind und in einem nicht-flüchtigen Speichermittel (21) der sicheren Steuerungseinrichtung (20) abrufbar gespeichert sind.

2. Sicherheitssteuerung (1) nach Anspruch 1, **dadurch gekennzeichnet, dass** die Sicherheitssteuerung (1) zumindest teilweise ohne physische Einstellelemente zum Einstellen der Betriebsparameter der Sicherheitssteuerung (1) ausgeführt ist.

3. Sicherheitssteuerung (1) nach Anspruch 1, **dadurch gekennzeichnet, dass** die Einstellungen aller einstellbaren Betriebsparameter der Sicherheitssteuerung (1) fest einprogrammiert sind und in dem nicht-flüchtigen Speichermittel (21) der sicheren Steuerungseinrichtung (20) abrufbar gespeichert sind.

4. Sicherheitssteuerung (1) nach Anspruch 3, **dadurch gekennzeichnet, dass** die Sicherheitssteuerung (1) vollständig ohne physische Einstellelemente zum Einstellen der Betriebsparameter der Sicherheitssteuerung (1) ausgeführt ist.

5. Sicherheitssteuerung (1) nach einem der Ansprüche 1 bis 4, **dadurch gekennzeichnet, dass** die fest einprogrammierten Betriebsparameter Taktarten für Takterkennungen zum Testen der Sicherheitssteuerung (1) umfassen.

6. Sicherheitssteuerung (1) nach einem der Ansprüche 1 bis 5, **dadurch gekennzeichnet, dass** die fest einprogrammierten Betriebsparameter ausgewählte Sicherheitsfunktionen, die mittels der Sicherheitssteuerung (1) realisierbar sind, umfassen.

7. Sicherheitssteuerung (1) nach einem der Ansprüche 1 bis 6, **dadurch gekennzeichnet, dass** die fest einprogrammierten Betriebsparameter Startarten für die an die Sicherheitssteuerung (1) anschließbaren Aktoren umfassen.

8. Sicherheitssteuerung (1) nach einem der Ansprüche 1 bis 7, **dadurch gekennzeichnet, dass** die Sicherheitssteuerung (1) modular ausgebildet ist und ein zentrales Steuerungsmodul (2), welches die sichere Steuerungseinrichtung (20) umfasst, sowie eine Mehrzahl von Anschlussmodulen (3.1, 3.2, 3.3), welche die Sicherheitseingänge (30a, 30b, 30c, 30d) und/oder die Sicherheitsausgänge (31a, 31b, 31c, 31d) umfassen, aufweist.

9. Verfahren zur Herstellung einer Sicherheitssteuerung (1), umfassend die Schritte:
- Konfigurieren (100) der Sicherheitsfunktionen und/oder modularer Komponenten der Sicherheitssteuerung (1) mittels eines softwarebasierten Konfigurationswerkzeugs und Einstellen der Betriebsparameter der Sicherheitssteuerung (1) mittels des Konfigurationswerkzeugs,
- Speichern (200) der Konfiguration der Sicherheitssteuerung (1) und der Einstellungen der Betriebsparameter,
- Herstellen (300) der Sicherheitssteuerung (1) ohne physische Einstellelemente zum Einstellen der Betriebsparameter der Sicherheitssteuerung (1) auf Basis der gespeicherten Konfiguration,
- Programmieren (400) eines Steuerungsprogramms (210) zur Steuerung der Sicherheitssteuerung (1), wobei die Betriebsparameter der Sicherheitssteuerung (1) fest einprogrammiert werden, und
- Speichern (500) des Steuerungsprogramms (210) und der fest einprogrammierten Betriebsparameter in einem nicht-flüchtigen Speichermittel (21) der Sicherheitssteuerung (1).

10. Verfahren nach Anspruch 9, **dadurch gekennzeichnet, dass** während des Schritts des Konfigurierens (100) physische Einstellelemente der Sicherheitssteuerung (1) zum Einstellen der Betriebsparameter mittels einer grafischen Benutzeroberfläche des softwarebasierten Konfigurationswerkzeugs visualisiert werden.
